# EUROPEAN PATENT SPECIFICATION

(11) **EP 3 254 926 B1**
(45) Date of publication and mention of the grant of the patent: **22.12.2021**
(21) Application number: 17174604.3
(22) Date of filing: 06.06.2017
(51) Int. Cl.: B61F 9/00, B61H 7/12

(54) **RAIL CLAMPING DEVICE AND TRAPPED RAIL VEHICLE THEREOF**
SCHIENENKLEMMVORRICHTUNG UND EIN DAMIT BLOCKIERTES SCHIENENFAHRZEUG
DISPOSITIF DE SERRAGE DE RAIL ET UN VÉHICULE FERROVIAIRE IMMOBILISÉ AVEC CE DISPOSITIF

(30) Priority: 07.06.2016 CN 201610398244
(43) Date of publication of application: 13.12.2017
(73) Proprietor: Changzhou Development & Manufacture Centre Co., Ltd., Changzhou City, Jiangsu 213002 (CN)
(72) Inventor: GAO, Jianrong, Changzhou City, Jiangsu 213002 (CN); WANG, Meilin, Changzhou City, Jiangsu 213002 (CN); SHI, Fahui, Changzhou City, Jiangsu 213002 (CN); CHEN, Xinjiang, Changzhou City, Jiangsu 213002 (CN); LEI, Peng, Changzhou City, Jiangsu 213002 (CN); WANG, Shuchao, Changzhou City, Jiangsu 213002 (CN); HUANG, Jianwei, Changzhou City, Jiangsu 213002 (CN); LI, Feng, Changzhou City, Jiangsu 213002 (CN)
(74) Representative: Vitina, Maruta

(56) References cited:
- WO-A1-2009/155685
- CA-A1- 2 509 372
- CN-U- 201 580 385
- CN-U- 204 222 875

## Description

### TECHNICAL FIELD

The present invention relates to a rail clamping device and a trapped rail vehicle thereof.

### BACKGROUND

With the development of railway transportation industry, people have higher and higher requirementsfor the safety and performance of vehicles running on a steel rail.

At present, as a type of railway transportation vehicles, the trapped rail vehicle has already been widely used for material and personnel transportation in a complex section and in a mining area with high production capacity.

At present, a traditional rail clamping device for the trapped rail vehicle only has outer clamping wheels. The outer clamping wheels are directly fixed on a vehicle frame or a bogie and respectively and oppositely arranged at two sides of the trapped rail vehicle. A distance between the outer clamping wheels is fixed. When a rail gauge is changed, the outer clamping wheels and the steel rail may severely interfere with each other, thereby influencing the service life of the outer clamping wheels and the steel rail, also influencing the normal operation of the trapped rail vehicle, causing low reliability and not ensuring the running safety of the trapped rail vehicle.

The closest prior art [WO 2009/155685 A1 (AMIRI AHMAD [CA]) 30 December 2009] discloses a rail clamping device, comprising a fixed seat, a slide seat (a joint is sliding on support rod) and clamping members, the slide seat is connected to the fixed seat in a sliding manner and forms a transverse moving pair with the fixed seat; the clamping members comprise outer clamping members and inner clamping members. The inner clamping members are respectively disposed at two sides of a steel rail; and an appearance of a lower portion of the inner clamping members is a straight cylinder, a bottom end of a lower portion of the outer clamping members is provided with a flange or a bottom end of a lower portion of the inner clamping members is provided with a flange, and an appearance of a lower portion of the outer clamping members is a straight cylinder. However, the joints and handles are connected by bolts. Said double joints are able to swivel sideways and back and forth relative to their horizontal support rod, which means that the joint causes the rod to swing in sideways. After the joint swings, it forms a certain angle with rather than in a horizontal plane. The sliding distance relative to the joint will be very small. Such a small sliding distance will not be able to withstand the change in the distance between the carriage and the tracker during a turn or when the distance between the tracks changes. As result, this rail clamping device does not ensure the running safety of the trapped rail vehicle.

Furthermore, the mining area has a complex terrain. The rail is laid on a steep hill or at a sharp turn along the terrain, so the trapped rail vehicle is easy to derail and overturn, leading to property loss and even personnel casualties for production. The above deficiencies are worth improving.

### SUMMARY

In order to improve the above deficiencies, the present invention provides an ordinary trapped rail vehicle capable of automatically adjusting a distance between two opposite rail clamping devices to adapt to the change of a rail gauge, and a rail clamping device flexibly adaptive to the change of the rail gauge. The present invention is realized through the features of claim 1.

Further, a bottom of the fixed seat is recessed to form a guide groove, and a top of the slide seat is bulged to form a slide block; and the fixed seat and the slide seat are mutually nested to form the moving pair through the guide groove and the slide block.

Further, the bottom of the fixed seat is bulged to form a guide block, and the top of the slide seat is recessed to form a slide groove; and the fixed seat and the slide seat are mutually nested to form the moving pair through the guide block and the slide groove.

Further, the rail clamping device further includes a slide rod; the bottom of the fixed seat downward extends perpendicularly to the direction of the moving pair to form a convex plate, and a guide hole is transversely penetrated in the convex plate; two fixed holes are arranged at two transverse sides of the slide seat corresponding to the guide hole; and the slide rod penetrates through the guide hole so as to be connected with the fixed seat in a sliding manner, and two ends of the slide rod respectively penetrate through the fixed holes so as to be fixedly connected with the slide seat.

Further, the rail clamping device further includes a guide rod; two transverse sides of the bottom of the fixed seat downward extends perpendicularly to the direction of the moving pair to form two convex plates, and the two convex plates are respectively provided with two fixed holes in a penetrating manner; an upper portion of the slide seat stretches between the two convex plates and is provided with a slide hole in a penetrating manner at a position where an axis of the fixed hole passes through; and the guide rod penetrates through the slide hole so as to be connected with the slide seat in a sliding manner, and two ends of the guide rod respectively penetrate through the fixed holes so as to be fixedly connected with the fixed seat.

Further, the slide seat includes an outer slide seat and an inner slide seat; the outer slide seat is fixedly connected with the inner slide seat; the outer slide seat is fixedly connected with the outer clamping member; and the inner slide seat is fixedly connected with the inner clamping member.

Further, the outer clamping member includes an outer clamping wheel shaft and outer clamping wheels; the outer clamping wheel shaft partially protrudes out of the outer clamping wheels, and an upper portion of the outer clamping wheel shaft is fixedly connected with the slide seat so as to be movably connected with the outer clamping wheels; and the upper portion of the outer clamping wheel is of a straight cylindrical shape, the lower portion of the outer clamping wheel downward extends to enable the rail web to partially stretch into the rail clamping cavity, and the bottom end of the outer clamping wheel extends towards the direction of the rail web to form a flange.

Further, the inner clamping member includes an inner clamping wheel shaft and inner clamping wheels; the inner clamping wheel shaft partially protrudes out of the inner clamping wheels, and an upper portion of the inner clamping wheel shaft is fixedly connected with the slide seat so as to be movably connected with the inner clamping wheels; and the inner clamping wheel is of a straight cylindrical shape.

A four-wheel-type trapped rail vehicle includes a vehicle frame, wheels and rail clamping devices; the rail clamping devices are any one of the above rail clamping devices, and the rail clamping devices are arranged adjacent to a front end of each front wheel and a rear end of each rear wheel; and a fixed seat of the rail clamping device is fixedly connected with the vehicle frame, and further, the quantity of the wheels is four.

An eight-wheel-type trapped rail vehicle includes a vehicle frame, a bogie, wheels and rail clamping devices; the rail clamping devices are any one of the above rail clamping devices, and the rail clamping devices are arranged adjacent to the front end of each front wheel and the rear end of each rear wheel of the bogie; and a fixed seat of the rail clamping device is fixedly connected with the bogie. Further, the quantity of the wheels is eight.

The present invention has the beneficial effects as follows:
1. The slide seat can slide left and right relative to the fixed seat, and when the trapped rail vehicle runs on the steel rail, a distance of two opposite outer clamping wheels is automatically adjusted by driving the slide seat where the inner outer clamping member and the outer clamping member are arranged through an external force generated by the steel rail.
2. A horizontal backlash δ between the clamping wheel and the steel rail head is very small, so that a valid rail clamping distance △ of the outer clamping member for the steel rail head is basically unchanged in the running process of the trapped rail vehicle whether at a straight road or at a curve.
3. The rail clamping devices are close to the wheels, and when the wheels jump upwards to a height lower than a rim of the wheels, the flanges arranged on the outer clamping member or the inner clamping member of the rail clamping device prevent the wheels from further rising, so that an effect of rail clamping and preventing the trapped rail vehicle from derailing can be realized.
4. The adjustment range of the distance between two opposite outer clamping members is large, so that the trapped rail vehicle can run on an ordinary rail under severe working conditions such as large change of the rail gauge, small horizontal turning radius, different heights of the rails and the like.
5. The split-type slide seat, the detachable clamping members, the bulged portion and the chamfer treatment as well as the slide rod enable the rail clamping device to be more flexible to use and convenient to install, disassemble and replace; and meanwhile, the abrasion of various parts is improved, the service life is long, and the reliability and the safety are high.
6. The rotating clamping wheels and the flange structure of the clamping members greatly improve the interference and abrasion between the clamping members and the side portion and bottom of the rail head, so that the service life of the rail clamping device is further prolonged, and the reliability and the safety are higher.

### BRIEF DESCRIPTION OF THE DRAWINGS

The present invention is further described in detail below in combination with the drawings and specific embodiments.
Fig. 1 is a left-view structural schematic diagram of embodiment I of a trapped rail vehicle of the present invention.
Fig. 2 is a top-view structural schematic diagram of embodiment I of a trapped rail vehicle of the present invention.
Fig. 3 is a left-view structural schematic diagram of embodiment II of a trapped rail vehicle of the present invention.
Fig. 4 is a top-view structural schematic diagram of embodiment II of a trapped rail vehicle of the present invention.
Fig. 5 is an A-A sectional view of Fig. 2 of the present invention.
Fig. 6 is a section-view structural schematic diagram of embodiment I of a rail clamping device of the present invention.
Fig. 7 is a left-view structural schematic diagram of embodiment I of a rail clamping device of the present invention.
Fig. 8 is a left-view structural schematic diagram of embodiment II of a rail clamping device of the present invention.
Fig. 9 is a section-view structural schematic diagram of embodiment II of a rail clamping device of the present invention.
Fig. 10 is a left-view structural schematic diagram of embodiment III of a rail clamping device of the present invention.
Fig. 11 is a section-view structural schematic diagram of embodiment III of a rail clamping device of the present invention.
Fig. 12 is a left-view structural schematic diagram of embodiment IV of a rail clamping device of the present invention.
Fig. 13 is a section-view structural schematic diagram of embodiment IV of a rail clamping device of the present invention.
Fig. 14 is a left-view structural schematic diagram of embodiment V of a rail clamping device of the present invention.
Fig. 15 is a section-view structural schematic diagram of embodiment V of a rail clamping device of the present invention.
Fig. 16 is a section-view structural schematic diagram of an inner clamping member of the present invention.
Fig. 17 is a section-view structural schematic diagram of an outer clamping member of the present invention.

Note: the drawings of the trapped rail vehicle of the present invention only illustrate a vehicle frame and the following general structures.

10-vehicle frame; 11-bogie; 20-wheel; 30-rail clamping device; 31-fixed seat; 32-slide seat; 321-inner slide seat; 322-outer slide seat; 323-screw; 324-slide rod; 325-nut; 326-chamfer portion; 327-guide rod; 33-inner clamping member; 331-inner clamping wheel shaft; 332-inner clamping wheel; 34-outer clamping wheel; 341-bulged portion; 342-outer clamping wheel shaft; 343-outer clamping wheel; 3431-flange; 40-steel rail; 401-rail head; 402-rail web; 403-rail bottom.

### DETAILED DESCRIPTION

The technical solution in embodiments of the present invention is clearly and completely described below. Apparently, the described embodiments are only partial embodiments rather than all embodiments of the present invention.

There are two basic types of trapped rail vehicle of the present invention: one is a four-wheel-type vehicle with a rigid frame 10; and the other one is an eight-wheel-type vehicle with bogies 11, and the description is made below in combination with specific embodiments.

### Embodiment I of the trapped rail vehicle

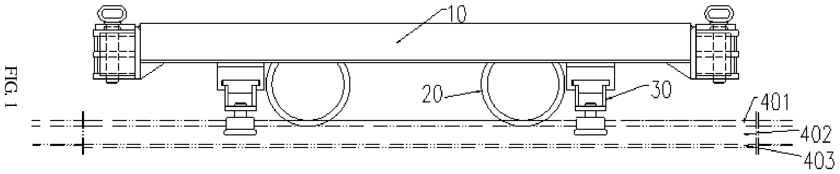

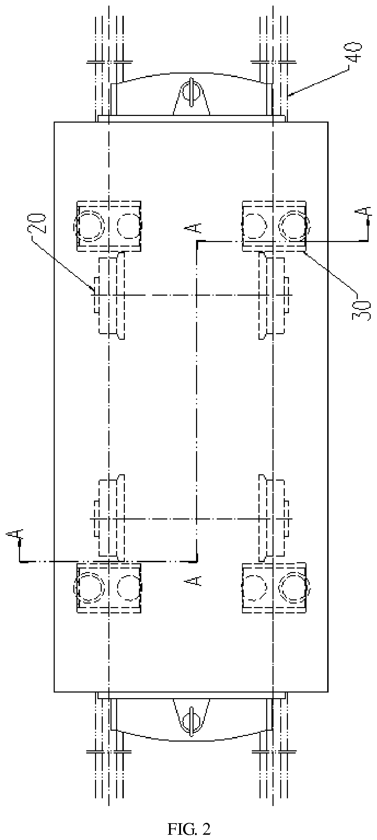

As shown in Fig. 1 and Fig. 2, a four-wheel-type trapped rail vehicle includes a vehicle frame 10, wheels 20 and rail clamping devices 30; and four rail clamping devices 30 are respectively arranged at the front end of each front wheel and the rear end of each rear wheel in an advancing direction of the trapped rail vehicle, and the rail clamping devices 30 are fixed on the vehicle frame 10 in a welding manner. The trapped rail vehicle runs on a steel rail 40; and the steel rail 40 includes a rail head 401, a rail web 402 and a rail bottom 403, and a cross section of the steel rail 40 is in an I shape.

### Embodiment II of the trapped rail vehicle

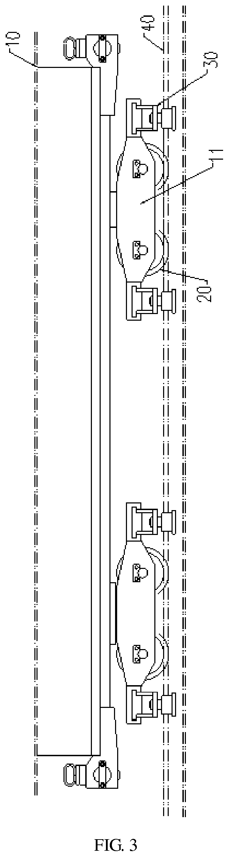

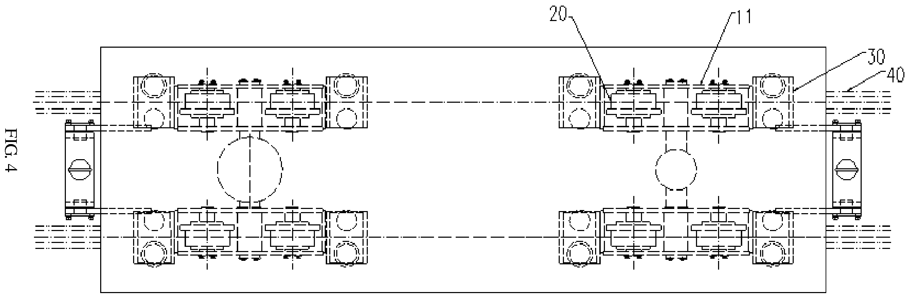

As shown in Fig. 3 and Fig. 4, an eight-wheel-type trapped rail vehicle includes a vehicle frame 10, bogies 11, wheels 20 and rail clamping devices 30; the vehicle frame 10 is arranged on the two bogies 11; each bogie 11 is provided with four wheels 20; eight rail clamping devices 30 are respectively disposed at the front end of each front wheel and the rear end of each rear wheel on the bogie 11 in the advancing direction of the trapped rail vehicle; and the rail clamping devices 30 are fixed on the bogies 11 in a welding manner.

### Embodiment I of the rail clamping device

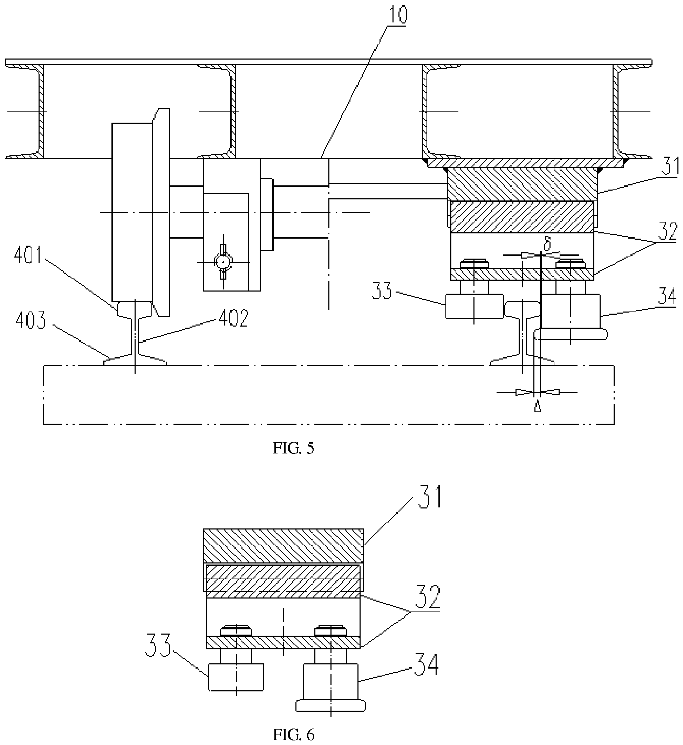

The rail clamping devices 30 in the above two embodiments are of a same type and are described below in combination with Fig. 5 to Fig. 7.

As shown in Fig. 5 to Fig. 7, the rail clamping device 30 includes a fixed seat 31 and a slide seat 32; the fixed seat 31 is connected with the vehicle frame 10 or the bogies 11 in a welding or mechanical connection manner, and preferably in a detachable manner; the bottom of the fixed seat 31 is recessed to form a T-shaped groove, and the top of the slide seat 32 is bulged; through the "T"-shaped nested connection of the bottom recess of the fixed seat 31 and the top bulge of the slide seat 32, the T-shaped groove is used as a guide groove, and the slide seat 32 can slide left and right relative to the fixed seat 31.

The slide seat 32 is of an integral structure; the slide seat 32 is hollow at a middle portion and runs through from left to right; the bottom of the slide seat 32 is connected with a clamping member, and preferably, the left side and the right side of the slide seat 32 are vertically connected with an outer clamping member 34 and an inner clamping member 33 in a welding or threading manner and preferably in a detachable manner; the appearance of a lower portion of the inner clamping member 33 is a straight cylinder; the bottom end of a lower portion of the outer clamping member 34 is provided with a flange 3431 or the bottom end of the lower portion of the inner clamping member 33 is provided with a flange 3431, and the appearance of the lower portion of the outer clamping member 34 is a straight cylinder; the inner clamping member 33 and the outer clamping member 34 can move up and down; and particularly when the rail is under a steep-hill condition, the inner clamping member 33 and the outer clamping member 34 can move up and down, thereby preventing the rail clamping device from derailing.

The inner sides of the outer clamping member 34 and inner clamping member 33 and the bottom side of the slide seat 32 are encircled to form a rail clamping cavity; and when in use, the outer clamping member 34 is disposed at the outer side of the steel rail 40, the inner clamping member 33 is disposed at the inner side of the steel rail 40, and the rail head 401 is disposed in the rail clamping cavity.

When the trapped rail vehicle runs on the steel rail 40, the slide seat 32 of each rail clamping device 30 moves leftwards or rightwards along the guide groove of the fixed seat 31 by virtue of a horizontal acting force of the side surface of the rail head 401 on the clamping members, so that a distance between two opposite outer clamping members 34 is automatically adjusted. Preferably, the lower portion of the outer clamping member 34 downward extends to enable partial rail web 402 to stretch into the rail clamping cavity; and a side of the bottom end of the outer clamping member 34 adjacent to the rail web 402 extends towards the direction of the rail web 402 to form a bulged portion 341. The rail clamping device 30 is close to the wheels; when the wheels 20 upward jump to a height lower than a rim of the wheels 20, the bulged portion 341 will prevent the wheels from rising, thereby playing a rail clamping effect, so that the rail clamping device 30 has a better effect and complete functions, and the safety of the trapped rail vehicle when in running is improved.

On the basis of the above embodiment, the rail clamping device 30 may also adopt the following structure.

### Embodiment II of the rail clamping deviceand embodiment III of the rail clamping device

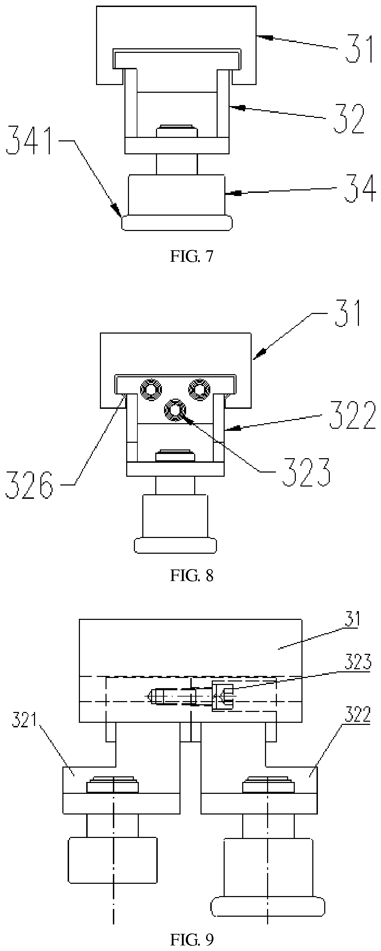

As shown in Fig. 8 to Fig. 11, the bottom of the fixed seat 31 and the top of the slide seat 32 can be connected in a "T"-shaped nested manner by adopting the bottom recess of the fixed seat 31 and the top bulge of the slide seat 32 or by adopting a guide block formed by the bottom bulge of the fixed seat 31 and a slide groove formed by the top recess of the slide seat 32; and the slide seat 32 can be nested from the left side or the right side of the fixed seat 31 and may also be nested from both sides of the fixed seat 31. Of course, without departing from the spirit of the connecting mode, nested connection of other forms or modes can also be adopted, i.e. the slide seat 32 can move left and right relative to the fixed seat 31.

Preferably, a stress angle of the above "T"-shaped nested connection is chamfered to form a chamfer portion 326; and preferably, a space used for the up-down movement and front-rear movement is reserved at the "T"-shaped nested connection position. The structure can optimize the installation, disassembly and replacement operation, can also improve the abrasion caused by stress between the fixed seat 31 and the slide seat 32, and facilitates smooth sliding.

The slide seat 32 is of a split-type structure and includes an outer slide seat 322 and an inner slide seat 321; the outer slide seat 322 and the inner slide seat 321 are fixedly connected through screws 323 and preferably through three screws 323 in a triangular distribution manner; and the outer clamping member 34 is arranged at the bottom of the outer slide seat 322, the inner clamping member 33 is arranged at the bottom of the inner slide seat 321, and a specific arrangement way refers to the above embodiments.

When the trapped rail vehicle runs on the steel rail 40, the slide seat 32 of each rail clamping device 30 moves leftwards or rightwards relative to the fixed seat 31 by virtue of a horizontal acting force of the side surface of the rail head 401 on the clamping members, so that a distance between two opposite outer clamping members 34 is automatically adjusted. In the present embodiment, the integral structure is further improved as the split-type structure, and by adopting the split-type structure, along-term abrading portion on the top of the slide seat 32 can be replaced, so that the split-type structure is convenient to install and easy to replace.

### Embodiment IV of the rail clamping device

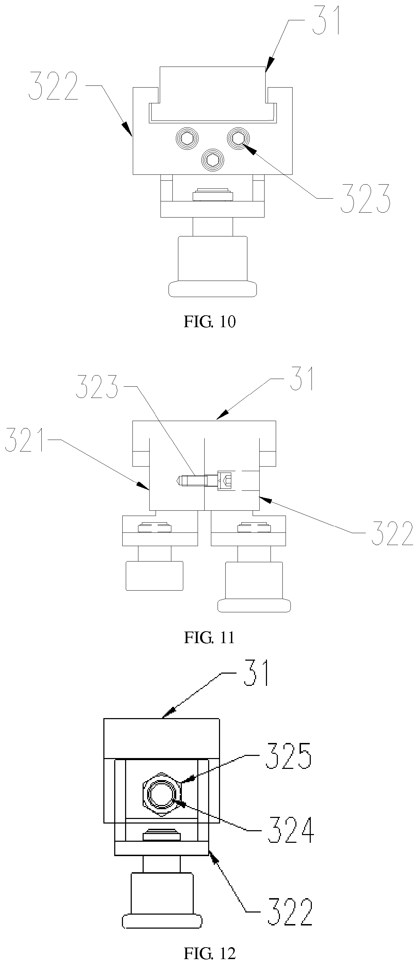

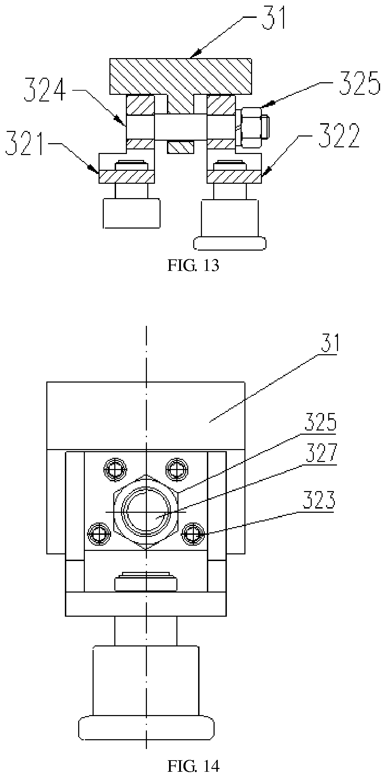

As shown in Fig. 12 and Fig. 13, the cross section of the fixed seat 31 is of a regular T shape, and a circular guide hole runs through the middle-lower portion of the fixed seat from left to right; the cross sections of the outer slide seat 322 and the inner slide seat 321 are respectively of an L shape, circular fixed holes run through the middle-upper portion of the outer slide seat 322 and the inner slide seat 321 from left to right, and the outer slide seat 322 and the inner slide seat 321 are respectively and oppositely arranged at the left side and the right side of the fixed seat 31; a slide rod 324 penetrates through the guide hole, the outer slide seat 322 and the inner slide seat 321 are respectively fixed at two ends of the slide rod 324, the slide rod 324 is preferably of a straight cylindrical shape, a diameter of the guide hole is adaptive to a diameter of a middle portion of the slide rod 324, a diameter of the fixed hole is adaptive to a diameter of two ends of the slide rod 324, and preferably, the diameter of the guide hole is greater than the diameter of the fixed hole, so that two ends of the slide rod 324 can perform transverse unidirectional limitation to the slide seat 32 installed on the slide rod 324, the other direction of the inner slide seat 321 is fixed in a welding manner, the other direction of the outer slide seat 322 is fixed through a nut 325 and outer threads at the end portion of the slide rod 324 and preferably in a detachable manner.

When the trapped rail vehicle runs on the steel rail 40, the slide seat 32 of each rail clamping device 30 moves leftwards or rightwards along the guide hole by virtue of a horizontal acting force of the side surface of the rail head 401 on the clamping members, so that a distance between two opposite outer clamping members 34 is automatically adjusted. Of course, without departing from the spirit of the connecting mode, slide-rod connection of other forms or modes can also be adopted, i.e. the outer slide seat 322 and the inner slide seat 321 can move left and right relative to the fixed seat 31.

### Embodiment V of the rail clamping device

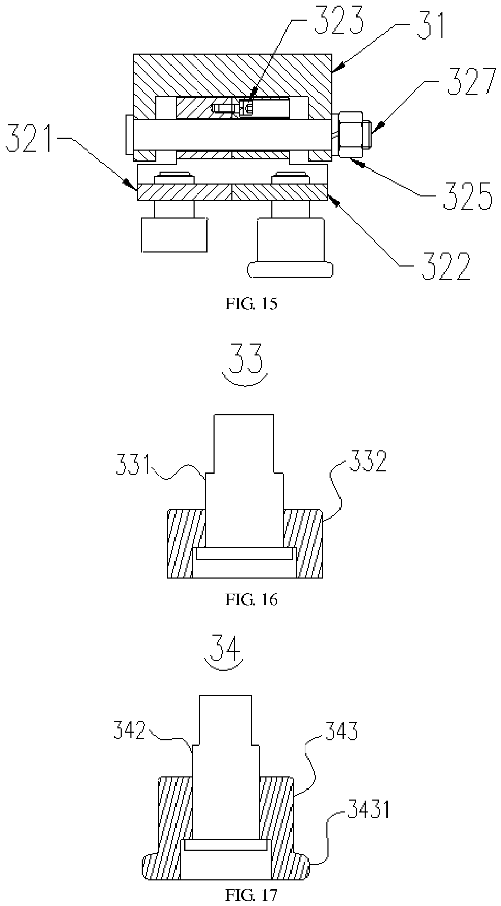

As shown in Fig. 14 and Fig. 15, the cross section of the fixed seat 31 is of an inverted concave shape, and the left side wall and the right side wall of the fixed seat 31 are respectively and oppositely provided with a circular fixed hole; the outer slide seat 322 and the inner slide seat 321 are abutted against each other in a back-to-back manner, the upper portions of the outer slide seat 322 and the inner slide seat 321 are fixedly connected through screws 323 and preferably through four screws 323 in a four-corner distribution manner; the four screws 323 are preferably distributed in a regular trapezoidal shape, a circular slide hole is arranged at the center position of the trapezoid, the slide hole runs through the upper portions of the outer slide seat 322 and the inner slide seat 321 and corresponds to the fixed hole; a guide rod 327 penetrates through the slide hole, two ends of the guide rod 327 respectively penetrate through the fixed holes and then are fixed, and the guide rod 327 is preferably of a straight cylindrical shape; the diameter of the slide hole is adaptive to the diameter of the middle portion of the guide rod 327, and the diameter of the fixed hole is adaptive to the diameter of two ends of the guide rod 327; and the guide rod 327 is preferably a single-head outer-threaded screw, and when in installation, an outer-threaded end only needs to be fixed by the nut 325 after the insertion.

When the trapped rail vehicle runs on the steel rail 40, the slide seat 32 of each rail clamping device 30 moves leftwards or rightwards along the guide rod by virtue of a horizontal acting force of the side surface of the rail head 401 on the clamping members, so that a distance between two opposite outer clamping members 34 is automatically adjusted. In the structure, not only the slide seat 32 is a split type, but also the guide rod 327 is detachable, thereby further facilitating installation, disassembly and replacement.

In each embodiment described above, as an implementation mode of the clamping members, the inner clamping member 33 (as shown in Fig. 16) includes an inner clamping wheel shaft 331 and inner clamping wheels 332; when in use, the inner clamping wheel shaft 331 partially protrudes out of the inner clamping wheels 332 and is limited through the bottom of the inner clamping wheel shaft 331; an upper portion of the inner clamping wheel shaft 331 is fixedly connected with the slide seat 32, so that the inner clamping wheel shaft 331 is movably connected with the inner clamping wheels 332; when the side surface of a rail head 401 acts on the inner clamping wheels 332, the inner clamping wheels 332 rotate around the inner clamping wheel shaft 331; the outer clamping member 34 (as shown in Fig. 17) includes an outer clamping wheel shaft 342 and outer clamping wheels 343; when in use, the outer clamping wheel shaft 342 partially protrudes out of the outer clamping wheels 343 and is limited through the bottom of the outer clamping wheel shaft 342; an upper portion of the outer clamping wheel shaft 342 is fixedly connected with the slide seat 32, so that the outer clamping wheel shaft 342 is movably connected with the outer clamping wheels 343; and when the side surface of the rail head 402 acts on the outer clamping wheels 343, the outer clamping wheels 343 rotate around the outer clamping wheel shaft 342. The upper portion of the inner clamping wheel shaft 331 and the upper portion of the outer clamping wheel shaft 342 are fixedly connected with the slide seat 32 in a welding manner, in a threading manner or through the nut.

The shape of the inner clamping wheel 332 is preferably of a straight cylindrical shape; the shape of the outer clamping wheel 343 is preferably as that the upper portion is of a straight cylindrical shape and the lower portion is provided with a flange 3431, and the flange 3431 is formed by outward circumferentially extending the lower portion of the outer clamping wheel 343; and preferably, the lower portion of the outer clamping wheel 343 downward extends to enable partial rail web 402 to stretch into the rail clamping cavity, and the flange 3431 stretches into a groove corresponding to the rail web 402 on the steel rail.

The clamping members in each embodiment described above may also include but is not limited to the following implementation modes: 1, the clamping member and the slide seat are of an integral structure; 2, the clamping member consists of a shaft and a shaft sleeve, the upper portion of the shaft and the slide seat are of an integral structure, and the shaft sleeve is firmly installed at the lower portion of the shaft; and 3, the clamping member consists of the shaft and the shaft sleeve, a bearing is also firmly nested between the shaft and the shaft sleeve, or the bearing is firmly nested between the shaft and the slide seat, the shaft sleeve is used for interacting with the side portion of the rail head, i.e., the clamping member is transformed into a rotating pair form.For example, the friction formed between the clamping member and the rail head is rolling friction.

The application of the rail clamping device described above is not limited to the trapped rail vehicle, and structures of any shapes such as a ship body, a frame body and the like can be arranged on the rail clamping device. Moreover, four or more wheels can be applied to the trapped rail vehicle or the structure of other shapes.

In general, the above are only preferred embodiments of the technical solution of the present invention, and are not used to limit the protection scope of the present invention.

## Claims

1. A rail clamping device (30) for a trapped rail vechicle, comprising a fixed seat (31), a slide seat (32) and clamping members, the slide seat (32) is connected to the fixed seat (31) in a sliding manner and forms a transverse moving pair with the fixed seat (31);
a steel rail (40) on which the trapped rail vehicle runs comprises a rail head (401), a rail web (402) and a rail bottom (403), and a cross section of the steel rail (40) is of an I shape;
the clamping members comprise outer clamping members (34) and inner clamping members (33); and an appearance of a lower portion of the inner clamping members (33) is a straight cylinder, a bottom end of a lower portion of the outer clamping members (34) is provided with a flange (3431), or a bottom end of a lower portion of the inner clamping members (33) is provided with a flange (3431), and an appearance of a lower portion of the outer clamping members (34) is a straight cylinder,
**characterized in that**
a bottom of the fixed seat (31) is recessed to form a guide groove, and a top of the slide seat (32) is bulged to form a slide block; and the fixed seat (31) and the slide seat (32) are mutually nested to form the moving pair through the guide groove and the slide block;
the outer clamping member (34) and the inner clamping member (33) form a rail clamping cavity with a bottom of the slide seat (32); and the cavity is used for accommodating the rail head (401); the outer clamping members (34) and the inner clamping members (33) are respectively disposed at two sides of the steel rail (40), so that the inner sides of the clamping members limit the left side and the right side of the rail head (401);
the slide seat (32) is fixedly connected with the clamping members; and in one clamping member, a distance between one outer clamping member (34) and one inner clamping member (33) is fixed;
the inner clamping member (33) comprises an inner clamping wheel shaft (331) and inner clamping wheels (332); the inner clamping wheel shaft (331) partially protrudes out of the inner clamping wheels (332), and an upper portion of the inner clamping wheel shaft (331) is fixedly connected with the slide seat (32) so as to be movably connected with the inner clamping wheels (332); and the inner clamping wheel (332) is of a straight cylindrical shape; the outer clamping member (34) comprises an outer clamping wheel shaft (342) and outer clamping wheels (343); the outer clamping wheel shaft (342) partially protrudes out of the outer clamping wheels (343), and an upper portion of the outer clamping wheel shaft (342) is fixedly connected with the slide seat (32) so as to be movably connected with the outer clamping wheels (343); and the upper portion of the outer clamping wheel (343) is of a straight cylindrical shape, a lower portion of the outer clamping wheel (343) downward extends to enable the rail web (402) to partially stretch into the rail clamping cavity, and the bottom end of the outer clamping wheel (343) extends towards the direction of the rail web (402) to form a flange (3431), and the flange (3431) stretches into a groove corresponding to the rail web (402) on the steel rail (40), so that the flange (3431) is capable to limit a bottom side of the rail head (401).

2. The rail clamping device (30) according to claim 1, wherein the bottom of the fixed seat (31) is bulged to form a guide block, and the top of the slide seat (32) is recessed to form a slide groove; and the fixed seat (31) and the slide seat (32) are mutually nested to form the moving pair through the guide block and the slide groove.

3. The rail clamping device (30) according to claim 1, wherein the rail clamping device (30) further comprises a slide rod (324); the bottom of the fixed seat (31) downward extends perpendicularly to a direction of the moving pair to form a convex plate, and a guide hole is transversely penetrated in the convex plate; two fixed holes are penetrated at two transverse sides of the slide seat (32) corresponding to the guide hole; and the slide rod (324) penetrates through the guide hole so as to be connected with the fixed seat (31) in a sliding manner, and two ends of the slide rod (324) respectively penetrate through the fixed holes so as to be fixedly connected with the slide seat (32).

4. The rail clamping device (30) according to claim 1, wherein the rail clamping device (30) further comprises a guide rod (327); two transverse sides of the bottom of the fixed seat (31) downward extends perpendicularly to the direction of the moving pair to form two convex plates, and the two convex plates are respectively provided with two fixed holes in a penetrating manner; an upper portion of the slide seat (32) stretches between the two convex plates and is provided with a slide hole in a penetrating manner at a position where an axis of the fixed hole passes through; and the guide rod (327) penetrates through the slide hole so as to be connected with the slide seat (32) in a sliding manner, and two ends of the guide rod (327) respectively penetrate through the fixed holes so as to be fixedly connected with the fixed seat (31).

5. The rail clamping device (30) according to claim 1, wherein the slide seat (32) comprises an outer slide seat (322) and an inner slide seat (321); the outer slide seat (322) is fixedly connected with the inner slide seat (321); the outer slide seat (322) is fixedly connected with the outer clamping member (34); and the inner slide seat (321) is fixedly connected with the inner clamping member (33).

6. A four-wheel-type trapped rail vehicle, comprising a vehicle frame (10), wheels (20) and rail clamping devices (30), wherein the rail clamping devices (30) are any one of the rail clamping devices (30) according to any one of claims 1 to 5, and the rail clamping devices (30) are arranged adjacent to a front end of each front wheel (20) and a rear end of each rear wheel (20); and a fixed seat (31) of the rail clamping device (30) is fixedly connected with the vehicle frame (10).

7. An eight-wheel-type trapped rail vehicle, comprising a vehicle frame (10), bogies (11), wheels (20) and rail clamping devices (30), wherein the rail clamping devices (30) are any one of the rail clamping devices (30) according to any one of claims 1 to 5, and the rail clamping devices (30) are arranged adjacent to the front end of each front wheel (20) and the rear end of each rear wheel (20) of the bogies (11); and a fixed seat (31) of the rail clamping device (30) is fixedly connected with the bogies (11).

## Patentansprüche

1. Schienenklemmvorrichtung (30) für ein Schienenklemmfahrzeug, mit einem festen Sitz (31), einem Gleitsitz (32) und Klemmelementen, wobei der Gleitsitz (32) mit dem festen Sitz (31) gleitend verbunden ist und mit dem festen Sitz (31) ein querbewegliches Paar bildet;
wobei eine Stahlschiene (40), auf der das Schienenklemmfahrzeug fährt, einen Schienenkopf (401), einen Schienensteg (402) und einen Schienenboden (403) aufweist, wobei ein Querschnitt der Stahlschiene (40) I-förmig ist;
wobei die Klemmelemente äußere Klemmelemente (34) und innere Klemmelemente (33) umfassen, wobei ein Aussehen eines unteren Abschnitts der inneren Klemmelemente (33) ein gerader Zylinder ist und ein unteres Ende eines unteren Abschnitts der äußeren Klemmelemente (34) mit einem Flansch (3431) versehen ist, oder wobei ein unteres Ende eines unteren Abschnitts der inneren Klemmelemente (33) mit einem Flansch (3431) versehen ist und ein Aussehen eines unteren Abschnitts der äußeren Klemmelemente (34) ein gerader Zylinder ist,
**dadurch gekennzeichnet, dass**
ein Boden des festen Sitzes (31) vertieft ist, um eine Führungsnut zu bilden, und eine Oberseite des Gleitsitzes (32) gewölbt ist, um einen Gleitblock zu bilden; wobei der feste Sitz (31) und der Gleitsitz (32) ineinander verschachtelt sind, um das bewegliche Paar durch die Führungsnut und den Gleitblock zu bilden;
wobei das äußere Klemmelement (34) und das innere Klemmelement (33) einen Schienenklemmhohlraum mit einem Boden des Gleitsitzes (32) bilden; wobei der Schienenklemmhohlraum zur Aufnahme des Schienenkopfes (401) verwendet wird; wobei die äußeren Klemmelemente (34) und die inneren Klemmelemente (33) jeweils an zwei Seiten der Stahlschiene (40) angeordnet sind, so dass die Innenseiten der Klemmelemente die linke Seite und die rechte Seite des Schienenkopfes (401) begrenzen;
wobei der Gleitsitz (32) fest mit den Klemmelementen verbunden ist; wobei in einem Klemmelement ein Abstand zwischen einem äußeren Klemmelement (34) und einem inneren Klemmelement (33) festgelegt ist;
wobei das innere Klemmelement (33) eine innere Klemmradwelle (331) und innere Klemmräder (332) aufweist, wobei die innere Klemmradwelle (331) teilweise aus den inneren Klemmrädern (332) herausragt und ein oberer Abschnitt der inneren Klemmradwelle (331) fest mit dem Gleitsitz (32) verbunden ist, um beweglich mit den inneren Klemmrädern (332) verbunden zu sein, wobei das innere Klemmrad (332) eine gerade zylindrische Form aufweist; wobei das äußere Klemmelement (34) eine äußere Klemmradwelle (342) und äußere Klemmräder (343) umfasst, wobei die äußere Klemmradwelle (342) teilweise aus den äußeren Klemmrädern (343) herausragt und ein oberer Abschnitt der äußeren Klemmradwelle (342) fest mit dem Gleitsitz (32) verbunden ist, um beweglich mit den äußeren Klemmrädern (343) verbunden zu sein, wobei der obere Abschnitt des äußeren Klemmrads (343) eine gerade zylindrische Form aufweist, wobei sich ein unterer Abschnitt des äußeren Klemmrads (343) nach unten erstreckt, um zu ermöglichen, dass sich der Schienensteg (402) teilweise in den Schienenklemmhohlraum erstreckt, und wobei das untere Ende des äußeren Klemmrads (343) sich in Richtung des Schienenstegs (402) erstreckt, um einen Flansch (3431) zu bilden, der sich in eine Nut erstreckt, die dem Schienensteg (402) auf der Stahlschiene (40) entspricht, so dass der Flansch (3431) in der Lage ist, eine Unterseite des Schienenkopfs (401) zu begrenzen.

2. Schienenklemmvorrichtung (30) nach Anspruch 1, wobei der Boden des festen Sitzes (31) gewölbt ist, um einen Führungsblock zu bilden, und wobei die Oberseite des Gleitsitzes (32) vertieft ist, um eine Gleitrille zu bilden; und der feste Sitz (31) und der Gleitsitz (32) ineinander verschachtelt sind, um das bewegliche Paar durch den Führungsblock und die Gleitnut zu bilden.

3. Schienenklemmvorrichtung (30) nach Anspruch 1, wobei die Schienenklemmvorrichtung (30) ferner eine Gleitstange (324) umfasst, wobei der Boden des festen Sitzes (31) sich senkrecht zu einer Richtung des sich beweglichen Paars nach unten erstreckt, um eine konvexe Platte zu bilden, und wobei ein Führungsloch in Querrichtung in die konvexe Platte eingedrungen ist, wobei zwei feste Löcher an zwei Querseiten des Gleitsitzes (32), die dem Führungsloch entsprechen, durchdrungen werden; und wobei die Gleitstange (324) durch das Führungsloch dringt, um mit dem festenSitz (31) gleitend verbunden zu werden, und wobei zwei Enden der Gleitstange (324) jeweils durch die festen Löcher dringen, um mit dem Gleitsitz (32) fest verbunden zu werden.

4. Schienenklemmvorrichtung (30) nach Anspruch 1, wobei die Schienenklemmvorrichtung (30) ferner eine Führungsstange (327) umfasst, wobei zwei Querseiten des Bodens des festen Sitzes (31) sich senkrecht zur Richtung des beweglichen Paars nach unten erstrecken, um zwei konvexe Platten zu bilden, und wobei die zwei konvexen Platten jeweils mit zwei festen Löchern in einer durchdringenden Weise versehen sind; wobei ein oberer Abschnitt des Gleitsitzes (32) sich zwischen den beiden konvexen Platten erstreckt und mit einem Gleitloch in einer durchdringenden Weise an einer Position versehen ist, durch die eine Achse des Festlochs hindurchgeht; und wobei die Führungsstange (327) durch das Gleitloch hindurchgeht, um mit dem Gleitsitz (32) in einer gleitenden Weise verbunden zu sein, und wobei zwei Enden der Führungsstange (327) jeweils durch die festen Löcher hindurchgehen, um fest mit dem festen Sitz (31) verbunden zu sein.

5. Schienenklemmvorrichtung (30) nach Anspruch 1, wobei der Gleitsitz (32) einen äußeren Gleitsitz (322) und einen inneren Gleitsitz (321) aufweist, wobei der äußere Gleitsitz (322) fest mit dem inneren Gleitsitz (321) verbunden ist, wobei der äußere Gleitsitz (322) fest mit dem äußeren Klemmelement (34) verbunden ist und der innere Gleitsitz (321) fest mit dem inneren Klemmelement (33) verbunden ist.

6. Schienenklemmfahrzeug mit vier Rädern, das einen Fahrzeugrahmen (10), Räder (20) und Schienenklemmvorrichtungen (30) umfasst, wobei die Schienenklemmvorrichtungen (30) eine der Schienenklemmvorrichtungen (30) nach einem der Ansprüche 1 bis 5 sind und die Schienenklemmvorrichtungen (30) neben einem vorderen Ende jedes Vorderrads (20) und einem hinteren Ende jedes Hinterrads (20) angeordnet sind; und wobei einfester Sitz (31) der Schienenklemmvorrichtung (30) fest mit dem Fahrzeugrahmen (10) verbunden ist.

7. Schienenklemmfahrzeug mit vier Rädern, das einen Fahrzeugrahmen (10), Drehgestelle (11), Räder (20) und Schienenklemmvorrichtungen (30) umfasst, wobei die Schienenklemmvorrichtungen (30) eine der Schienenklemmvorrichtungen (30) nach einem der Ansprüche 1 bis 5 sind und die Schienenklemmvorrichtungen (30) neben einem vorderen Ende jedes Vorderrads (20) und einem hinteren Ende jedes Hinterrads (20) der Drehgestelle (11) angeordnet sind, und wobei ein fester Sitz (31) der Schienenklemmvorrichtung (30) fest mit dem Fahrzeugrahmen (10) verbunden ist.

## Revendications

1. Dispositif de serrage de rail (30) pour un véhicule ferroviaire coincé, comprenant un siège fixe (31), un siège coulissant (32) et d'éléments de serrage, ledit siège coulissant (32) est relié audit siège fixe (31) de manière glissante et forme une paire mobile transversale avec ledit siège fixe (31);
un rail en acier (40) sur lequel circule ledit véhicule ferroviaire coincé comprend un champignon de rail (401), une âme de rail (402) et un fond de rail (403), et une section transversale dudit rail en acier (40) est en forme de I;
lesdits éléments de serrage comprennent d'éléments de serrage extérieurs (34) et d'éléments de serrage intérieurs (33); et une apparence d'une partie inférieure desdits éléments de serrage intérieurs (33) est un cylindre droit, une extrémité inférieure d'une partie inférieure desdits éléments de serrage extérieurs (34) est pourvue d'une rebord (3431), ou une extrémité inférieure d'un partie inférieure desdits éléments de serrage intérieurs (33) est pourvue d'une rebord (3431), et une apparence d'une partie inférieure desdits éléments de serrage extérieurs (34) est un cylindre droit,
**caractérisé en ce que**
un fond dudit siège fixe (31) est creux pour former une rainure de guidage, et un sommet dudit siège coulissant (32) est renflé pour former un bloc coulissant; et ledit siège fixe (31) et ledit siège coulissant (32) sont mutuellement emboîtés pour former ladite paire mobile à travers ladite rainure de guidage et ledit bloc coulissant;
ledit élément de serrage extérieur (34) et ledit élément de serrage intérieur (33) forment une cavité de serrage de rail avec un fond dudit siège coulissant (32); et ladite cavité est utilisée pour loger ledit champignon de rail (401); lesdits éléments de serrage extérieurs (34) et lesdits éléments de serrage intérieurs (33) sont respectivement disposés sur deux côtés dudit rail en acier (40), de sorte que lesdits côtés intérieurs desdits éléments de serrage limitent ledit côté gauche et ledit côté droit dudit champignon de rail (401);
ledit siège coulissant (32) est relié de manière fixe auxdits éléments de serrage; et dans un élément de serrage, une distance entre un élément de serrage extérieur (34) et un élément de serrage intérieur (33) est fixée;
ledit élément de serrage intérieur (33) comprend un arbre de roue de serrage intérieur (331) et de roues de serrage intérieurs (332); ledit arbre de roue de serrage intérieur (331) fait partiellement saillie hors desdites roues de serrage intérieurs (332), et une partie supérieure dudit arbre de roue de serrage intérieur (331) est reliée de manière fixe audit siège coulissant (32) de manière à être reliée de manière mobile à lesdites roues de serrage intérieurs (332); et ladite roue de serrage intérieur (332) est de forme cylindrique droite; ledit élément de serrage extérieur (34) comprend un arbre de roue de serrage extérieur (342) et de roues de serrage extérieurs (343); ledit arbre de roue de serrage extérieur (342) fait partiellement saillie hors desdites roues de serrage extérieurs (343), et une partie supérieure dudit arbre de roue de serrage extérieur (342) est reliée de manière fixe audit siège coulissant (32) de manière à être reliée de manière mobile à lesdites roues de serrage extérieurs (343); et ladite partie supérieure de ladite roue de serrage extérieur (343) est de forme cylindrique droite, une partie inférieure de ladite roue de serrage extérieur (343) s'étend vers le bas pour permettre à ladite âme de rail (402) de s'étirer partiellement dans ladite cavité de serrage de rail, et l'extrémité inférieure de ladite roue de serrage extérieur (343) s'étend en direction de ladite âme de rail (402) pour former une rebord (3431), et ladite rebord (3431) s'étend dans une rainure correspondant à ladite âme de rail (402) sur ledit rail en acier (40), de sorte que ladite rebord (3431) est capable de limiter un côté inférieur dudit champignon de rail (401).

2. Dispositif de serrage de rail (30) selon la revendication 1, dans lequel ledit fond dudit siège fixe (31) est bombé pour former un bloc de guidage, et ledit sommet dudit siège coulissant (32) est évidé pour former une rainure de coulissement; et ledit siège fixe (31) et ledit siège coulissant (32) sont mutuellement emboîtés pour former ladite paire mobile à travers ledit bloc de guidage et ladite rainure coulissante.

3. Dispositif de serrage de rail (30) selon la revendication 1, dans lequel ledit dispositif de serrage de rail (30) comprend en outre une tige coulissante (324); ledit fond dudit siège fixe (31) s'étend vers le bas perpendiculairement à une direction de ladite paire mobile pour former une plaque convexe, et un trou de guidage est pénétré transversalement dans ladite plaque convexe; deux trous fixes sont pénétrés sur deux côtés transversaux dudit siège coulissant (32) correspondant audit trou de guidage; et ladite tige coulissante (324) pénètre à travers ledit trou de guidage de manière à être reliée audit siège fixe (31) de manière coulissante, et deux extrémités de ladite tige coulissante (324) pénètrent respectivement à travers lesdits trous fixes de manière à être relié de manière fixe audit siège coulissant (32).

4. Dispositif de serrage de rail (30) selon la revendication 1, dans lequel ledit dispositif de serrage de rail (30) comprend en outre une tige de guidage (327); deux côtés transversaux dudit fond dudit siège fixe (31) s'étendent vers le bas perpendiculairement à ladite direction de ladite paire mobile pour former deux plaques convexes, et lesdites deux plaques convexes sont respectivement pourvues de deux trous fixes de manière pénétrante; une partie supérieure dudit siège coulissant (32) s'étend entre lesdites deux plaques convexes et est pourvue d'un trou coulissant de manière pénétrante à une position à travers laquelle passe un axe dudit trou fixe; et ladite tige de guidage (327) pénètre à travers ledit trou coulissant de manière à être reliée audit siège coulissant (32) de manière coulissante, et deux extrémités de ladite tige de guidage (327) pénètrent respectivement à travers lesdits trous fixes de manière à être relié de manière fixe audit siège fixe (31).

5. Dispositif de serrage de rail (30) selon la revendication 1, dans lequel ledit siège coulissant (32) comprend un siège coulissant extérieur (322) et un siège coulissant intérieur (321); ledit siège coulissant extérieur (322) est relié de manière fixe audit siège coulissant intérieur (321); ledit siège coulissant extérieur (322) est relié de manière fixe audit élément de serrage extérieur (34); et ledit siège coulissant intérieur (321) est relié de manière fixe audit élément de serrage intérieur (33).

6. Véhicule ferroviaire coincé du type à quatre roues, comprenant un châssis de véhicule (10), de roues (20) et de dispositifs de serrage de rail (30), dans lequel lesdits dispositifs de serrage de rail (30) sont l'un quelconque desdits dispositifs de serrage de rail (30) selon l'une quelconque des revendications 1 à 5, et lesdits dispositifs de serrage de rail (30) sont disposés adjacents à une extrémité avant de chaque roue avant (20) et à une extrémité arrière de chaque roue arrière (20); et un siège fixe (31) dudit dispositif de serrage de rail (30) est connecté de manière fixe audit châssis de véhicule (10).

7. Véhicule ferroviaire coincé du type à huit roues, comprenant un châssis de véhicule (10), de bogies (11), de roues (20) et de dispositifs de serrage de rail (30), dans lequel lesdits dispositifs de serrage de rail (30) sont l'un quelconque desdits dispositifs de serrage de rail (30) selon l'une quelconque des revendications 1 à 5, et lesdits dispositifs de serrage de rail (30) sont disposés adjacents à l'extrémité avant de chaque roue avant (20) et à l'extrémité arrière de chaque roue arrière (20) de lesdits bogies (11); et un siège fixe (31) dudit dispositif de serrage de rail (30) est relié de manière fixe auxdits bogies (11).
